# EUROPEAN PATENT APPLICATION

(11) **EP 2 371 895 A1**
(43) Date of publication of application: **05.10.2011**
(21) Application number: 11159903.1
(22) Date of filing: 25.03.2011
(51) Int. Cl.: C08L 21/00, C08K 5/5419, C08L 83/04, B60C 1/00

(54) **Rubber composition and pneumatic tire with a rubber component containing alkylalkoxysilane and silicone resin**

(30) Priority: 31.03.2010 US 319320 P; 23.02.2011 US 33028
(71) Applicant: The Goodyear Tire & Rubber Company, Akron, OH 44316-0001 (US)
(72) Inventor: SCHWEITZER, Claude, L-7750, Colmar-Berg (LU); LAMBERT, Isabelle Lea Louise Marie, B-6700, Arlon (BE); FRANK, Uwe Ernst, D-54329, Konz (DE); JACOBY, Claude Charles, L-6615, Wasserbillig (LU)
(74) Representative: Kutsch, Bernd

(57) **Abstract**

The present invention is directed to a rubber composition and a pneumatic tire comprising at least one component, the at least one component comprising a rubber composition, the rubber composition comprising:
at least one diene based elastomer;
an alkylalkoxysilane of formula I 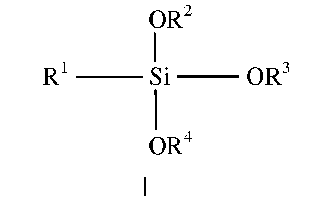 wherein R¹ is exclusive of sulfur and is an alkyl group of 1 to 18 carbon atoms or an aryl group of 6 to 18 carbon atoms, and R² R³ and R⁴ are independently alkyl of 1 to 8 carbon atoms; and
a silicone T resin.

## Description

### Background

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubbers utilized in making the tire.

In order to reduce the rolling resistance and to improve the treadwear characteristics of tires, rubbers having a high rebound have traditionally been utilized in making tire tread rubber compounds. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads.

Various additives may also be incorporated into the rubber composition to reduce rolling resistance. However, there is a continuing need to reduce rolling resistance in an effort to reduce fuel consumption.

### Summary of the Invention

The present invention is directed to a pneumatic tire in accordance with claim 1 and a rubber composition in accordance with claim 10.

Dependent claims refer to preferred embodiments of the invention.

### Description

There is disclosed a pneumatic tire comprising at least one component, the at least one component comprising a rubber composition, the rubber composition comprising:
at least one diene based elastomer;
an alkylalkoxysilane of the formula I 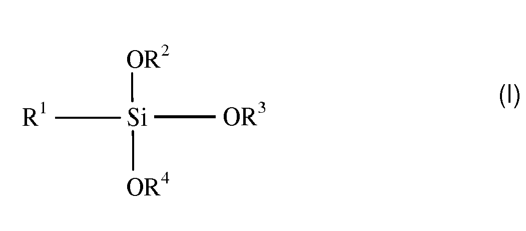
wherein R¹ is exclusive of sulfur and is an alkyl group of 1 to 18 carbon atoms or an aryl group of 6 to 18 carbon atoms, and R², R³ and R⁴ are independently alkyl of 1 to 8 carbon atoms; and
a silicone T resin.

There is further disclosed a rubber composition, the rubber composition comprising:
at least one diene based elastomer;
an alkylalkoxysilane of the formula I 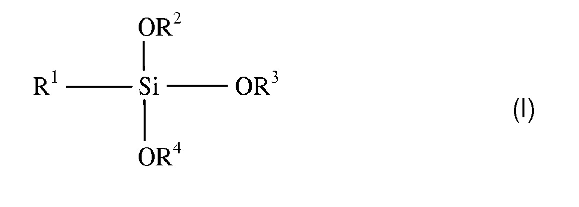 wherein R¹ is exclusive of sulfur and is an alkyl group of 1 to 18 carbon atoms or an aryl group of 6 to 18 carbon atoms, and R², R³ and R⁴ are independently alkyl of 1 to 8 carbon atoms; and
   a silicone T resin.

The rubber composition includes an alkylalkoxysilane of formula I. In one embodiment, R¹ is hexadecyl, and R², R³ and R⁴ are methyl.

In one embodiment, the rubber composition includes from 1 to 20 phr of the alkylalkoxysilane of formula I. In one embodiment, the rubber composition includes from 2 to 10 of the alkylalkoxysilane of formula I.

The rubber composition also includes a silicone T resin. By T resin, it is meant that the silicone resin has a structure based on the (RSiO)_{3/2} unit where R is selected from alkyl, alkenyl, and aryl groups. Further reference may be made to "Silicone Resins in Rubber Compounding: Characterisation, Processing, and Performance in Tire Tread Formulations" by Thomas Chaussee and Manfred Gloeggler, presented at the Tire Technology Expo 2009, Hamburg, Germany, May 17-19 2009.

In one embodiment, the rubber composition includes from 1 to 20 phr of the silicone T resin. In one embodiment, the rubber composition includes from 2 to 10 phr of the silicone T resin. In one embodiment, the T resin is Resin 960 available from Dow Corning.

The rubber composition includes at least one additional diene based rubber. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are natural rubber, synthetic polyisoprene, polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

In one embodiment, cis 1,4-polybutadiene rubber (BR) is used. Suitable polybutadiene rubbers may be prepared, for example, by organic solution polymerization of 1,3-butadiene. The BR may be conveniently characterized, for example, by having at least a 90 percent cis 1,4-content and a glass transition temperature Tg in a range of from -95 to -105°C. Suitable polybutadiene rubbers are available commercially, such as Budene® 1207 from Goodyear.

In one embodiment, a synthetic or natural polyisoprene rubber may be used.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. A Tg can be suitably determined as a peak midpoint by a differential scanning calorimeter (DSC) at a temperature rate of increase of 10°C per minute.

The term "phr" as used herein, and according to conventional practice, refers to "parts by weight of a respective material per 100 parts by weight of rubber, or elastomer."

In one embodiment, the sodium carboxymethylcellulose is combined with the at least one diene based elastomer in a mixing procedure as follows. Sodium carboxymethylcellulose may be added to water in a concentration ranging from 1 g of sodium hydroxymethylcellulose per 10 g of water to 1 g of sodium hydroxymethylcellulose per 1000 g of water. The resulting aqueous solution of sodium hydroxymethylcellulose is then mixed with a latex of the at least one diene based elastomer. The mixture is then dried resulting in the rubber composition of sodium carboxymethylcellulose and elastomer. Alternatively, the mixture of aqueous sodium carboxymethylcellulose and latex may be coagulated using a one percent solution of calcium chloride, followed by washing of the coagulated solids with water and drying to obtain the rubber composition of sodium carboxymethylcellulose and elastomer.

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Various commercially available silicas may be used, such as, only for example herein silicas commercially available from PPG Industries under the Hi-Sil trademark with designations 210 and 243; silicas available from Rhodia, with, for example, designations of Z1165MP and Z165GR and silicas available from Degussa AG with, for example, designations VN2 and VN3.

Commonly employed carbon blacks can be used as a conventional filler in an amount ranging from 10 to 150 phr. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including particulate fillers including ultra high molecular weight polyethylene (UHMWPE), crosslinked particulate polymer gels including those disclosed in US-A- 6,242,534; US-A-6,207,757; US-A- 6,133,364; US-A- 6,372,857; US-A- 5,395,891; or US-A-6,127,488, and plasticized starch composite filler including to that disclosed in US-A- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z-Alk-Sn-Alk-Z II

in which Z is selected from the group consisting of 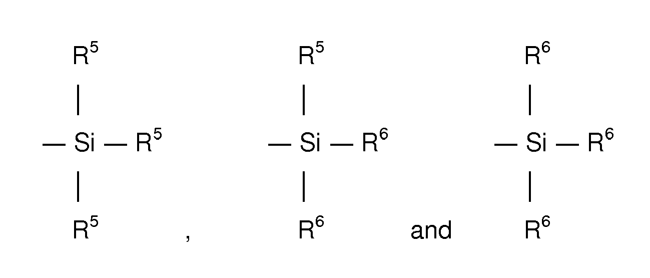 where R⁵ is an alkyl group of 1 to 4 carbon atoms, cyclohexyl or phenyl; R⁶ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula II, Z may be 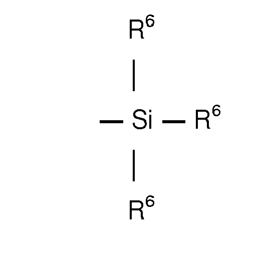 where R⁶ is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-A- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road, or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following example.

### Example 1

In this example, preparation and testing of rubber compositions containing alkylalkoxysilane of formula I and a silicone T resin is illustrated.

Four rubber compound samples were prepared using a three step mixing procedure following the recipes shown in Table 1, with all amounts given in phr.

Samples (for viscoelastic and stress-strain measurements) were cured for ten minutes at 170°C and tested for physical properties as shown in Table 1.

Viscoelastic properties were measured using an Eplexor® dynamic mechanical analyzer at 10 Hz and 2% DSA. Stress-strain properties were measured using a Zwick 1445 Universal Testing System (UTS). Cure properties were measured using a Rubber Process Analyzer (RPA) 2000 from Alpha Technologies. References to an RPA 2000 instrument may be found in the following publications: H. A. Palowski, et al, Rubber World, June 1992 and January 1997, as well as Rubber & Plastics News, Apr. 26 and May 10, 1993.

**Table 1**

| **Sample No.** | **1** | **2** | **3** | **4** |
|---|---|---|---|---|
| **First Non-Productive Mix Step** | | | | |
| Polybutadiene¹ | 45 | 45 | 45 | 45 |
| Styrene-Butadiene² | 75.62 | 75.62 | 75.62 | 75.62 |
| Carbon Black | 5 | 5 | 5 | 5 |
| Antidegradant³ | 0.8 | 0.8 | 0.8 | 0.8 |
| Process Oil⁴ | 12 | 9 | 9 | 9 |
| Stearic Acid | 3 | 3 | 3 | 3 |
| Silica | 60 | 60 | 60 | 60 |
| Alkylalkoxysilane⁵ | 0 | 2 | 1 | 2 |
| **Second Non-Productive Mix Step** | | | | |
| Waxes⁶ | 1.5 | 1.5 | 1.5 | 1.5 |
| Antidegradant³ | 1.7 | 1.7 | 1.7 | 1.7 |
| Process Oil⁴ | 7.38 | 4.38 | 4.38 | 4.38 |
| Silica | 45 | 45 | 45 | 45 |
| Silicone Resin⁷ | 0 | 0 | 1 | 2 |
| Organosilane⁸ | 6.56 | 6.56 | 6.56 | 6.56 |
| **Productive Mix Step** | | | | |
| Antidegradant⁹ | 0.5 | 0.5 | 0.5 | 0.5 |
| Zinc Oxide | 2.5 | 2.5 | 2.5 | 2.5 |
| Sulfur | 1.4 | 1.4 | 1.4 | 1.4 |
| Accelerators¹⁰ | 3.9 | 3.9 | 3.9 | 3.9 |

| | | | | |
|---|---|---|---|---|
| ¹ High cis polybutadiene, obtained as Budene 1207 from The Goodyear Tire & Rubber Company ² Solution polymerized styrene butadiene rubber containing 25 percent by weight of styrene, 50 percent by weigh vinyl, extended with 27 phr of oil ³ p-phenylene diamine type ⁴ low PCA type ⁵ Alkylalkoxysilane as Dynasylan 9116, from Evonik ⁶ paraffinic and microcrystalline types ⁷ Silicone T resin, as Resin 690 from Dow Corning ⁸ 3,3'-bis(triethoxysilylpropyl) disulfide, Si266 ⁹ mixed p-phenylene diamine type ¹⁰ sulfenamide and guanidine types | | | | |

**Table 2**

| **Sample Nol** | **1** | **2** | **3** | **4** |
|---|---|---|---|---|
| **RPA2000 (ASTM D5289)** | | | | |
| Uncured; Test: @ 100°C, Dyn Strain = 15 %, Frequency = 0.83/8.3 Hz | | | | |
| G' (15%), MPa | 0.24 | 0.25 | 0.25 | 0.27 |
| Cured 10 min @ 170°C; Test: @ 100°C, Frequency = 1 Hz | | | | |
| **Sweep 1** | | | | |
| G' (1%), MPa | 3.55 | 3.37 | 2.89 | 2.97 |
| Tan Delta (1%) | 0.137 | 0.12 | 0.118 | 0.11 |
| G' (10%), MPa | 1.87 | 1.94 | 1.73 | 1.81 |
| Tan Delta (10%) | 0.167 | 0.155 | 0.153 | 0.14 |
| **Sweep 2** | | | | |
| G' (1 %), Mpa | 2.63 | 2.69 | 2.35 | 2.46 |
| Tan Delta (1%) | 0.18 | 0.155 | 0.152 | 0.143 |
| G' (10%), MPa | 1.8 | 1.89 | 1.68 | 1.77 |
| Tan Delta (10%) | 0.159 | 0.148 | 0.147 | 0.133 |
| G' (50%), MPa | 0.91 | 1.01 | 0.92 | 1.05 |
| Tan Delta (50%) | 0.191 | 0.258 | 0.279 | 0.222 |

### Metravib SMD2000

Temperature sweep obtained in a dynamic shear mode at a frequency of 1 Hertz and at an angle of 0.00583 rad.

| | | | | |
|---|---|---|---|---|
| Tan Delta (-40 °C) | 0.284 | 0.289 | 0.291 | 0.274 |
| Tan Delta (-30 °C) | 0.243 | 0.258 | 0.269 | 0.248 |
| Tan Delta (-20 °C) | 0.180 | 0.184 | 0.209 | 0.192 |
| Tan Delta (-10 °C) | 0.144 | 0.141 | 0.166 | 0.154 |
| Tan Delta (0 °C) | 0.127 | 0.120 | 0.140 | 0.135 |
| Tan Delta (10 °C) | 0.118 | 0.112 | 0.125 | 0.122 |
| maximum in Tan Delta | 0.287 | 0.289 | 0.292 | 0.274 |
| temp at max Tan D (°C) | -43.1 | -39.2 | -39.1 | -41.2 |
| **Stress-Strain Properties (Rinq Modulus ASTM D412)** | | | | |
| Cure: 10 min @ 170°C; Test: @ 23°C | | | | |
| 200% Modulus, MPa | 4.2 | 5.4 | 5.8 | 6.2 |
| 300% Modulus, MPa | 8.1 | 9.6 | 10.9 | 10.9 |
| Elongation at Break, % | 520 | 454 | 435 | 426 |
| Tensile Strength, MPa | 14.8 | 14.1 | 15.5 | 14.7 |
| Spec Energy, MPa | 29.5 | 25.6 | 25.6 | 25 |
| True Tensile | 92.2 | 78.3 | 82.7 | 77.5 |
| Shore A | 64.8 | 68.3 | 65.3 | 67.9 |
| Rebound, % | 34.4 | 35.9 | 35.6 | 34.3 |
| **Zwick Rebound (ASTM D1054, DIN 53512)** | | | | |
| Cure: 10 min @ 170°C | | | | |
| Rebound 0°C, % | 17.6 | 17.7 | 17.5 | 17.4 |
| Rebound | 54.5 | 57 | 58.8 | 58.5 |
| Rebound -10°C, % | 12.1 | 12.3 | 12.1 | 12.7 |
| **Tear Strenqth¹** | | | | |
| Cure: 10 min @ 170°C; Test: @ 100°C, Adhesion to Itself | | | | |
| Tear Strength, N/mm | 22.9 | 17.9 | 17.6 | 15.3 |
| **Rotary Drum Abrasion (ASTM D5963, DIN 53516)** | | | | |
| Cure: 10 min @ 170°C; Test: @ 23°C | | | | |
| Relative Vol. Loss, mm³ | 105 | 102 | 98 | 96 |

¹ ASTM D4393 except that a sample width of 2.5 cm is used and a clear Mylar plastic film window of a 5 mm width is inserted between the two test samples. It is an interfacial adhesion measurement (pulling force expressed in N/mm units) between two layers of the same tested compound which have been co-cured together with the Mylar film window therebetween. The purpose of the Mylar film window is to delimit the width of the pealed area.

As seen by the data of Tables 1 and 2, combination of the alkylalkoxysilane and silane T resin results in significant improvement in high temperature hysteresis, as indicated by the decrease in tangent delta at 10% strain measured at 100°-C. A decreased tangent delta at high temperature indicates improved rolling resistance in a tire. The data also indicates an improvement in low temperature hysteresis, as indicated by the increase in tangent delta measured in a range of -40 °C to 10 °C. An increased tangent delta at low temperature indicates improved wet and winter performance in a tire. Such dual improvement in rolling resistance and wet/winter performance is surprising and unexpected.

## Claims

1. A pneumatic tire comprising at least one component, the at least one component comprising a rubber composition, the rubber composition comprising:
at least one diene based elastomer;
an alkylalkoxysilane of the formula 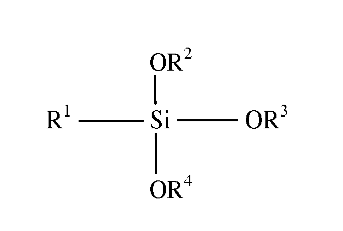 wherein R¹ is exclusive of sulfur and is an alkyl group of 1 to 18 carbon atoms or an aryl group of 6 to 18 carbon atoms, and R², R³ and R⁴ are independently alkyl of 1 to 8 carbon atoms; and
a silicone T resin.

2. The pneumatic tire of claim 1 wherein the silicone T resin has a structure based on the (RSiO)_{3/2} unit where R is selected from alkyl, alkenyl, and aryl groups.

3. The pneumatic tire of claim 1 or 2 wherein the alkylalkoxysilane is present in an amount ranging from 1 to 20 phr.

4. The pneumatic tire of claim 3 wherein the alkylalkoxysilane is present in an amount ranging from 2 to 10 phr.

5. The pneumatic tire of at least one of the previous claims wherein the silicone T resin is present in an amount ranging from 1 to 20 phr.

6. The pneumatic tire of claim 5 wherein the silicone T resin is present in an amount ranging from 2 to 10 phr.

7. The pneumatic tire of at least one of the previous claims wherein the R¹ is hexadecyl, and R², R³ and R⁴ are methyl.

8. The pneumatic tire of at least one of the previous claims wherein the component is selected from the group consisting of tread, tread cap, tread base, sidewall, apex, chafer, sidewall insert, wirecoat or innerliner.

9. The pneumatic tire of claim 8 wherein the component is a tread.

10. A rubber composition comprising:
at least one diene based elastomer;
an alkylalkoxysilane of the formula 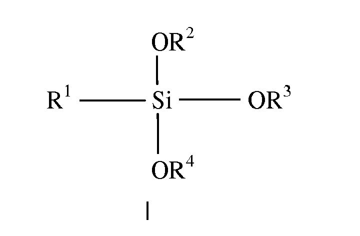 wherein R¹ is exclusive of sulfur and is an alkyl group of 1 to 18 carbon atoms or an aryl group of 6 to 18 carbon atoms, and R² R³ and R⁴ are independently alkyl of 1 to 8 carbon atoms; and
a silicone T resin.

11. The rubber composition of claim 10 wherein the silicone T resin has a structure based on the (RSiO)_{3/2} unit where R is selected from alkyl, alkenyl, and aryl groups.

12. The rubber composition of claim 10 or 11 wherein the alkylalkoxysilane is present in an amount ranging from 1 to 20 phr, alternatively in an amount ranging from 2 to 10 phr.

13. The rubber composition of at least one of the claims 10 to 12 wherein the silicone T resin is present in an amount ranging from 1 to 20 phr, alternatively in an amount ranging from 2 to 10 phr.

14. The rubber composition of claim 10 wherein the R¹ is hexadecyl, and R², R³ and R⁴ are methyl.
